# EUROPÄISCHE PATENTSCHRIFT

(11) **EP 0 279 373 B1**
(45) Veröffentlichungstag und Bekanntmachung des Hinweises auf die Patenterteilung: **28.04.1993**
(21) Anmeldenummer: 88102076.2
(22) Anmeldetag: 12.02.1988
(51) Int. Cl.: C08J 3/16

(54) **In Wasser redispergierbare, Organo(poly)siloxan enthaltende Pulver und Verfahren zu ihrer Herstellung**
Powder redispersable in water, containing organic (poly)siloxane, and process for preparing it
Poudre d'organopolysiloxane redispersable dans l'eau et procédé de préparation

(30) Priorität: 12.02.1987 DE 3704400
(43) Veröffentlichungstag der Anmeldung: 24.08.1988
(73) Patentinhaber: WACKER-CHEMIE GMBH, D-81737 München (DE)
(72) Erfinder: Eck, Herbert, Dr. Dipl.-Chem., D-8263 Burghausen (DE); Innertsberger, Ernst, Dipl.-Chem., D-8263 Burghausen (DE); Hopf, Heinrich, D-8263 Burghausen (DE); Huber, Peter, Dr. Dipl.-Chem., D-8263 Burghausen (DE); Schmidlkofer, Jakob, D-8261 Mehring-Öd (DE)

(56) Entgegenhaltungen:
- FR-A- 2 302 848
- GB-A- 892 789
- US-A- 3 210 208

## Beschreibung

In Wasser redispergierbare, Organo(poly)siloxan enthaltende Pulver, wobei es sich beim Organo(poly)siloxan um solches handelt, bei dem durchschnittlich mindestens zwei SiC-gebundene organische Reste je Siliciumatom vorliegen, die Pulver Organo(poly)siloxan der vorstehend definierten Art in Mengen von mindestens 50 Gewichtsprozent, bezogen auf das Gesamtgewicht des jeweiligen Pulvers (berechnet als wasserfreies Pulver) und zusätzlich zum Organo(poly)siloxan wasserlösliches, filmbildendes Polymer enthalten und durch Sprühtrocknung wäßriger Gemische ihrer Bestandteile hergestellt wurden, sind bereits bekannt. Hierzu wird z.B. auf GB 892 787 (ausgegeben 28. März 1962, Dow Corning Corporation) und US 3 210 208 (ausgegeben 5. Okt. 1965, G.M. Grass et al., Smith Kline & French Laboratories) verwiesen.

Es bestand nun die Aufgabe, in Wasser redispergierbare, Organo(poly)siloxan enthaltende Pulver, bereitzustellen, wobei es sich beim Organo(poly)siloxan um solches handelt, bei dem durchschnittlich mindestens zwei SiC-gebundene organische Reste je Siliciumatom vorliegen, von denen ein Teil durch Si-gebundenen Wasserstoff ersetzt sein kann, die Pulver zusätzlich zum Organo(poly)siloxan wasserlösliches Polymer enthalten, durch Sprühtrocknung wäßriger Gemische ihrer Bestandteile hergestellt wurden und mindestens 40 Gewichtsprozent, bezogen auf ihr Gewicht, Organo(poly)siloxan der oben definierten Art enthalten, trotzdem aber gut rieselfähig, gut in Wasser redispergierbar und besonders lange lagerbeständig sind. Diese Aufgabe wird durch die Erfindung gelöst.

Gegenstand der Erfindung sind in Wasser redispergierbare, Organo(poly)siloxan enthaltende Pulver, wobei es sich beim Organo(poly)siloxan um solches handelt, bei dem durchschnittlich mindestens zwei SiC-gebundene organische Reste je Siliciumatom vorliegen, von denen ein Teil durch Si-gebundenen Wasserstoff ersetzt sein kann, und das eine Viskosität von 1 mm².s⁻¹ bis 10⁶ mm².s⁻¹ bei 23°C bzw. 25°C besitzt, die Pulver Organo(poly)siloxan der vorstehend definierten Art in Mengen von mindestens 50 Gewichtsprozent, bezogen auf das Gesamtgewicht des jeweiligen Pulvers (berechnet als wasserfreies Pulver) und, zusätzlich zum Organo(poly)siloxan wasserlösliches, filmbildendes Polymer enthalten und durch Sprühtrocknung wäßriger Gemische ihrer Bestandteile hergestellt wurden, dadurch gekennzeichnet, daß zur Herstellung der Pulver als wasserlösliches, filmbildendes Polymer solches mit einem Trübungspunkt von 35°C bis 98°C verwendet wurde und daß die Pulver 5 bis 14 Gewichtsprozent wasserlösliches, filmbildendes Polymer, bezogen auf das Gewicht von zur Herstellung des Pulvers eingesetztem Organo(poly)siloxan, enthalten.

Gegenstand dar Erfindung ist weiterhin ein Verfahren zur Herstellung von in Wasser redispergierbaren, Organo(poly)siloxan enthaltenden Pulvern, wobei es sich beim Organo(poly)siloxan um solches handelt, bei dem durchschnittlich mindestens zwei SiC-gebundene organische Reste je Siliciumatom vorliegen, von denen ein Teil durch Si-gebundenen Wasserstoff ersetzt sein kann, und das eine Viskosität von 1 mm².s⁻¹ bis 10⁶ mm².s⁻¹ bei 23°C bzw. 25°C besitzt, die Pulver Organo(poly)siloxan der vorstehend definierten Art in Mengen von mindestens 50 Gewichtsprozent, bezogen auf das Gesamtgewicht des jeweils hergestellten Pulvers (berechnet als wasserfreies Pulver) und zusätzlich zum Organo(poly)siloxan wasserlösliches, filmbildendes Polymer enthalten, durch Sprühtrocknung wäßriger Gemische der Bestandteile der Pulver, dadurch gekennzeichnet, daß als wasserlösliches, filmbildendes Polymer solches mit einem Trübungspunkt von 35°C bis 98°C verwendet wird und daß wasserlösliches, filmbildendes Polymer in Mengen von 5 bis 14 Gewichtsprozent, bezogen auf das Gewicht von eingesetztem Organo(poly)siloxan, verwendet wird.

Zu den Organo(poly)siloxanen, bei denen durchschnittlich mindestens zwei SiC-gebundene organische Reste je Siliciumatom vorliegen, von denen ein Teil durch SiC-gebundenen Wasserstoff ersetzt sein kann, gehören insbesondere solche der Formel

R¹R₂SiO(SiR₂O)ₙSiR₂R¹ ,

worin R gleiche oder verschiedene, einwertige Kohlenwasserstoffreste, die mindestens einen gegenüber Wasser bei der jeweiligen Trocknungstemperatur inerten Substituenten aufweisen können, oder Wasserstoff bedeutet mit der Maßgabe, daß an jedes Siliciumatom, an das ein Wasserstoffatom gebunden ist, auch mindestens ein Kohlenwasserstoffrest, vorzugsweise der Methylrest, gebunden ist, R¹ die gleiche Bedeutung hat oder -OR² bedeutet, wobei R² Wasserstoff ist oder einen Alkylrest mit 1 bis 20 Kohlenstoffatom(en), insbesondere 1 bis 4 Kohlenstoffatom(en), je Rest bedeutet und n 0 oder eine ganze Zahl ist, die einer Viskosität von 1 mm².s⁻¹ bis 10⁶mm².s⁻¹ bei 23°C bzw. 25°C entspricht.

Vorzugsweise enthalten die SiC-gebundenen organischen Reste der Organo(poly)siloxane in den erfindungsgemäßen Pulvern oder der bei dem erfindungsgemäßen Verfahren eingesetzten Organo(poly)siloxane und damit auch die organischen Reste R in der oben angegebenen Formel 1 bis 18 Kohlenstoffatom(e) je Rest. Beispiele für bevorzugte Kohlenwasserstoffreste sind Alkylreste mit 1 bis 18 Kohlenstoffatom(en) je Rest, wie der Methyl-, Ethyl-, n-Propyl-, Isopropyl- und 2-Ethylhexylrest sowie Butyl-, Hexyl- und Octadecylreste; 2 bis 18 Kohlenstoffatome je Rest aufweisende Kohlenwasserstoffreste mit mindestens einer aliphatischen Doppelbindung, wie der Vinyl-, Allyl-, Ethylallyl- und Butadienylrest; Cycloalkylreste mit 5 bis 18 Kohlenstoffatomen je Rest wie der Cyclohexylrest und Methylcyclohexylreste; Arylreste mit 6 bis 18 Kohlenstoffatomen je Rest, wie der Phenylrest; Alkarylreste mit 7 bis 18 Kohlenstoffatomen je Rest, wie Tolylreste; und Aralkylreste mit 7 bis 18 Kohlenstoffatomen je Rest, wie der Benzylrest.

Beispiele für Kohlenwasserstoffreste, die mindestens einen gegenüber Wasser bei der jeweiligen Trocknungstemperatur inerten Substituenten aufweisen, sind halogenierte Kohlenwasserstoffreste mit 1 bis 18 Kohlenstoffatom(en) je Rest, wie der 3,3,3-trifluorpropyl- und 3-Chlorpropylrest, sowie Chlorphenylreste; Mercaptoalkylreste mit 1 bis 18 Kohlenstoffatom(en) je Rest, wie der 3-Mercaptopropylrest; und Acyloxyalkylreste mit 1 bis 18 Kohlenstoffatom(en) je Rest, wie der 3-Methacryloxypropylrest.

Die Beispiele für Alkylreste R¹ gelten im vollen Umfang auch für die Alkylreste R².

Wichtige einzelne Beispiele für Organopolysiloxane der oben angegebenen Formel sind durch Trimethylsiloxygruppen endblockierte Dimethylpolysiloxane mit einer Viskosität von 350 mm².s⁻¹ bei 25°C, durch Trimethylsiloxygruppen endblockierte Methylhydrogenpolysiloxane, durch Trimethylsiloxygruppen endblockierte Mischpolymere aus Dimethylsiloxan- und Methylhydrogensiloxaneinheiten sowie in den endständigen Einheiten je eine Si-gebundene Hydroxylgruppe aufweisende Dimethylpolysiloxane mit einer Viskosität von etwa 75 000 mPa.s bei 23°C.

Ein weiteres Beispiel für ein Organopolysiloxan, das zwar nicht unter die oben angegebene Formel fällt, aber bei dem dennoch durchschnittlich mindestens zwei SiC-gebundene organische Reste je Siliciumatom vorliegen, ist ein im Handel erhältliches Mischpolymerisat aus 15,8 Molprozent C₆H₅SiO_{3/2}-, 42,1 Molprozent (C₆H₅)CH₃SiO_{2/2}-, 27,7 Molprozent (CH₃)₂SiO_{2/2}-und 14,4 Molprozent (CH₃)₃SiO_{1/2}- Einheiten mit einer Viskosität von 200 mm².s⁻¹ bei 25°C.

Wenn es sich bei den Organo(poly)siloxanen, bei denen durchschnittlich mindestens zwei SiC-gebundene organische Reste je Siliciumatom vorliegen, von denen ein Teil durch Si-gebundenen Wasserstoff ersetzt sein kann, um solche handelt, die, abgesehen von Si-gebundenem Wasserstoff, keine oder praktisch keine kondensierbaren Gruppen, wie Si-gebundene Hydroxylgruppen oder Alkoxygruppen, aufweisen, beträgt ihre Viskosität vorzugsweise höchstens 1000 mm².s⁻¹ bei 25°C.

In den erfindungsgemäßen Pulvern kann nur eine Art von Organo(poly)siloxan der in mindestens einem der Patentansprüche definierten Art vorliegen. Es können in diesen Pulvern aber auch Gemische aus mindestens zwei verschiedenen Arten derartiger Organo(poly)siloxane vorliegen. Ebenso kann bei dem erfindungsgemäßen Verfahren nur eine Art von Organo(poly)siloxan der in mindestens einem der Patentansprüche definierten Art eingesetzt werden. Es können bei dem erfindungsgemäßen Verfahren aber auch Gemische aus mindestens zwei verschiedenen Arten derartiger Organopolysiloxane eingesetzt werden.

Vorzugsweise enthalten die erfindungsgemäßen Pulver 60 bis 95 Gewichtsprozent, insbesondere 86 bis 92 Gewichtsprozent, jeweils bezogen auf das Gesamtgewicht des jeweiligen Pulvers (berechnet als wasserfreies Pulver), Organo(poly)siloxan der in mindestens einem der Patentansprüche definierten Art. Dementsprechend wird bei dem erfindungsgemäßen Verfahren Organo(poly)siloxan der in mindestens einem der Patentansprüche definierten Art vorzugsweise in Mengen von 60 bis 95 Gewichtsprozent, insbesondere 86 bis 92 Gewichtsprozent, jeweils bezogen auf das Gesamtgewicht des jeweiligen Pulvers (berechnet als wasserfreies Pulver), eingesetzt.

Bei den wasserlöslichen, filmbildenden Polymeren mit einem Trübungspunkt von 35° bis 98°C, vorzugsweise 40° bis 95°C, jeweils bestimmt nach DIN (Deutsche Industrie Norm) 53 917 vom Januar 1981, in Lösung in reinem Wasser kann es sich beispielsweise um durch teilweise Verseifung von Polyvinylacetat hergestellte Polyvinylalkohole mit einer Verseifungszahl (=mg KOH, die zur Verseifung der restlichen Acetylgruppen erforderlich sind) von 150 bis 240, vorzugsweise 170 bis 230, und einem viskosimetrisch ermitteltem Molekulargewicht von 15 000 bis 100 000, vorzugsweise 20 000 bis 75 000,Hydroxypropyl-cellulosen, AminoethylHydroxypropyl-cellulosen,Hydroxymethylpropyl-cellulosen oder Hydroxyethyl-methyl-cellulosen, in geeigneter Weise modifizierte Stärken oder um Gemische aus mindestens zwei derartiger Polymeren handeln. Durch teilweise Verseifung von Polyvinylacetat hergestellte Polyvinylalkohole sind besonders bevorzugt.

Wasserlösliches, filmbildendes Polymer mit einem Trübungspunkt von 35° bis 98°C wird in Mengen von 5 bis 14 Gewichtsprozent, insbesondere 7 bis 12 Gewichtsprozent, jeweils bezogen auf das Gewicht von zur Herstellung des jeweiligen Pulvers eingesetztem Organo(poly)siloxan, verwendet.

Zusätzlich zu Organo(poly)siloxan und wasserlöslichem, filmbildendem Polymer können die erfindungsgemäßen Pulver gegebenenfalls weitere Stoffe enthalten und bei dem erfindungsgemäßen Verfahren gegebenenfalls weitere Stoffe mitversprüht werden, jedoch nur in Mengen, die gewährleisten, daß die fertigen Pulver, bezogen auf das Gesamtgewicht des jeweiligen Pulvers (berechnet als wasserfreies Pulver), noch mindestens 50 Gewichtsprozent Organo(poly)siloxan enthalten. Beispiele für solche weiteren Stoffe sind bzw. können sein mit Wasser mischbare Lösungsmittel, wie Diacetonalkohol, mit Wasser nicht mischbare Lösungsmittel, wie Gemische von Xylolisomeren, Fungicide, lösliche Farbstoffe, Pigmente, Füllstoffe, bzw. Antibackmittel mit einer Oberfläche von mindestens 50 m²/g, wie pyrogen erzeugtes Siliciumdioxid, und Füllstoffe, bzw. Antibackmittel mit einer Oberfläche von weniger als 50 m²/g, wie Kreidepulver, nadelförmiges Calciumcarbonat und Quarzmehl sowie andere ionogene oder nicht-ionogene Emulgatoren als wasserlösliche, filmbildende Polymere mit einem Trübungspunkt von 35° bis 98°C und Kondensationskatalysatoren.

In den zu versprühenden Gemischen beträgt die Menge von Wasser vorzugsweise 45 bis 95 Gewichtsprozent, insbesondere 60 bis 85 Gewichtsprozent, jeweils bezogen auf das Gesamtgewicht des jeweiligen zu versprühenden Gemisches.

Die Sprühtrocknung kann in beliebigen zur Sprühtrocknung von Flüssigkeiten geeigneten und bereits vielfach bekannten Vorrichtungen, beispielsweise solchen mit mindestens einer Drallzerstäuberdüse oder mit einer rotierenden Zerstäuberscheibe, in einem erwärmten Trockengassystem durchgeführt werden.

Vorzugsweise beträgt die Eintrittstemperatur des Trockengasstroms, wobei es sich bevorzugt um Luft handelt, in die Sprühtrocknungs-Vorrichtung 110° bis 250°C und die Austrittstemperatur des beim Trocknen gebildeten Gasstroms 60° bis 100°C, insbesondere 65° bis 95°C.

Anstatt im Gemisch mit Wasser und den übrigen Bestandteilen der erfindungsgemäßen oder erfindungsgemäß hergestellten Pulver können Antiblock-(antiback)-mittel zumindest teilweise auch getrennt von dem der Sprühtrocknung zugeführten, Organo(poly)siloxan enthaltenden Gemisch in die Vorrichtung, in der die Sprühtrocknung stattfindet, eingeführt und/oder mit dem sprühgetrockneten Gut vor dessen Eintritt in das für dieses Gut bestimmte Auffanggefäß vermischt werden, jedoch wieder nur in Mengen, die gewährleisten, daß die fertigen Pulver, bezogen auf das Gesamtgewicht des jeweiligen Pulvers (berechnet als wasserfreies Pulver),noch mindestens 50 Gewichtsprozent Organo(poly)siloxan enthalten. Dabei sind Mengen derartiger Antiblockmittel von 0,5 bis 20 Gewichtsprozent, insbesondere 1 bis 5 Gewichtsprozent, jeweils bezogen auf das Gewicht vom Organo(poly)siloxan, bevorzugt, wenn Antiblockmittel mitverwendet werden. Die Antiblockmittel sind meist anorganische feste Stoffe mit mittleren Teilchengrößen von 0,001 bis 50 mikrometer, insbesondere 0,01 bis 0,1 mikrometer. Es kann sich dabei z.B. um Aluminiumsilikate, kolloidales Siliciumdioxidgel, gefälltes Siliciumdioxid mit einer Oberfläche von mindestens 50 m²/g, pyrogen erzeugtes Siliciumdioxid, gemahlene Tone, Leichtspat, Talkum, Zemente, Kreidepulver oder Diatomeenerde handeln.

Diese Antiblockmittel können hydrophobiert sein, weil auf ihre Oberfläche z.B. Hexamethyldisiloxan einwirken gelassen wurde.

Die erfindungsgemäßen oder erfindungsgemäß hergestellten Pulver können überall eingesetzt werden, wo die Verwendung von in Wasser emulgiertem oder in Wasser emulgierbarem Organo(poly)siloxan, bei dem durchschnittlich mindestens zwei SiC-gebundene organische Reste je Siliciumatom vorliegen, von denen ein Teil durch Si-gebundenen Wasserstoff ersetzt sein kann, zweckmäßig ist. Sie können somit im trockenen Zustand oder in mit Wasser verdünnter Form beispielsweise als Zusätze zu Lehm, Gips,Putzen, Beton, einschließlich Gas- oder Schaumbeton, zur Herstellung von Kalksandsteinen verwendeten Gemischen oder Anstrichfarben verwendet werden. Sie können beispielsweise auch zur Obeiflächenhydrophobierung von Schüttgütern, wie Perliten (Blählava), Vermiculiten (Blähglimmer) oder Gasbetongranulaten verwendet werden. Sie eignen sich z.B. auch zur Verhütung oder Bekampfung von Schaum in wäßrigen Medien.

In den folgenden Beispielen beziehen sich alle Angaben von Teilen auf das Gewicht, soweit nichts anderes angegeben ist.

### Beispiel 1

In einer Lösung von 70 g durch teilweise Verseifung von Polyvinylacetat hergestelltem Polyvinylalkohol mit einer Verseifungszahl von 190, einem viskosimetrisch bestimmten Molekulargewicht von etwa 26000 und einem Trübungspunkt von 90°C in 1630 g Wasser werden 630 g durch Trimethylsiloxygruppen endblockiertes Dimethylpolysiloxan mit einer Viskosität von 350 mm².s⁻¹ bei 25°C emulgiert. Die so erhaltene Emulsion wird in einem mit einer Drallzerstäuberdüse arbeitendem Sprühtrockner (Nubilosa AJM 014, wobei es sich bei der Bezeichnung "Nubilosa" um ein registriertes Warenzeichen handeln dürfte) bei einem Düsendruck von 4000 hPa (abs.), einem Durchsatz von 2 l/Stunde, einer Lufteintrittstemperatur von 150°C und einer Gasaustrittstemperatur von 90°C in ein Pulver umgewandelt, dem vor dessen Eintreten in das Auffanggefäß 2,5 %, bezogen auf das Gewicht des in dem Pulver enthaltenen Organopolysiloxans, gefälltes, durch Behandlung mit Hexamethyldisiloxan hydrophobiertes Siliciumdioxid mit einer BET-Oberfläche von 110 ± 30 m²/g zugesetzt werden.

Das so erhaltene Pulver ist sehr gut in Wasser redispergierbar und sehr gut rieselfähig. Auch nach 1-jähriger Lagerung ist keine merkliche Veränderung dieses Pulvers zu beobachten.

### Beispiel 2

Eine Emulsion von 450 g durch Trimethylsiloxygruppen endblockiertes Dimethylpolysiloxan mit einer Viskosität von 350 mm² .s⁻¹ bei 25°C in einer Lösung von 50 g des in Beispiel 1 näher beschriebenen Polyvinylalkohols in 1450 g Wasser wird in dem in Beispiel 1 näher beschriebenen Sprühtrockner bei einem Düsendruck von 4300 hPa (abs.), einem Durchsatz von etwa 2l/ Stunde, einer Lufteintrittstemperatur von 165°C und einer Gasaustrittstemperatur von 85°C in ein Pulver umgewandelt, dem vor dessen Eintritt in das Auffanggefäß 2,5 %, bezogen auf das Gewicht des in dem Pulver enthaltenen Organopolysiloxans des in Beispiel 1 näher beschriebenen hydrophobierten Siliciumdioxids zugesetzt werden.

Das so erhaltene Pulver ist sehr gut in Wasser redispergierbar und sehr gut rieselfähig. Auch nach 1-jähriger Lagerung ist keine merkliche Änderung dieses Pulvers zu beobachten.

### Beispiel 3

Die in Beispiel 2 beschriebene Arbeitsweise wird wiederholt mit den Abänderungen, daß 50 g durch teilweise Verseifung von Polyvinylacetat hergestellter Polyvinylalkohol mit einer Verseifungszahl von 223, einem viskosimetrisch bestimmtem Molekulargewicht von etwa 27000 und einem Trübungspunkt von 45°C anstelle des in Beispiel 1 näher beschriebenen Polyvinylalkohols verwendet werden, der Düsendruck 5300 hPa (abs.) anstelle der 4000 hPa (abs.) beträgt und 2 %, bezogen auf das Gewicht des in dem Pulver enthaltenen Organopolysiloxans, des in Beispiel 1 näher beschriebenen Siliciumdioxids anstelle der 2,5 % dieses Siliciumdioxids eingesetzt werden.

Das so erhaltene Pulver ist sehr gut rieselfähig und sehr gut in Wasser redispergierbar. Auch nach 1-jähriger Lagerung ist keine merkliche Veränderung dieses Pulvers zu beobachten.

### Beispiel 4

Eine Emulsion von 450 g eines im Handel erhältlichen Mischpolymerisats aus 15,8 Molprozent C₆H₅SiO_{3/2}-, 42,1 Molprozent (C₆H₅)CH₃SiO_{2/2}-, 27,7 Molprozent (CH₃)₂SiO_{2/2}- und 14,4 Molprozent (CH₃)₃SiO_{1/2}-Einheiten mit einer Viskosität von 200 mm² .s⁻¹ bei 25°C in einer Lösung von 50 g des in Beispiel 1 näher beschriebenen Polyvinylalkohols in 1200 g Wasser wird in dem in Beispiel 1 näher beschriebenen Sprühtrockner bei einem Düsendruck von 5300 hPa (abs.), einem Durchsatz von 2 l/Stunde, einer Lufteintrittstemperatur von 165°C und einer Gasaustrittstemperatur von 85°C in ein Pulver umgewandelt, das gut rieselfähig und sehr gut in Wasser redispergierbar ist. Auch nach 1-jähriger Lagerung ist keine merkliche Veränderung dieses Pulvers zu beobachten.

### Beispiel 5

Die in Beispiel 3 angegebene Arbeitsweise wird wiederholt mit der Abänderung, daß 50 g einer im Handel erhältlichen Hydroxyethyl-methyl-cellulose mit einem Trübungspunkt von 70°C anstelle der 50 g des in Beispiel 3 näher beschriebenen Polyvinylalkohols verwendet werden. Auch das so erhaltene Pulver ist sehr gut rieselfähig und sehr gut in Wasser redispergierbar.

### Beispiel 6

Die in Beispiel 3 angegebene Arbeitsweise wird wiederholt mit der Abänderung, daß 50 g einer im Handel erhältlichen Hydroxypropyl-methyl-cellulose mit einem Trübungspunkt von 70°C anstelle der 50 g des in Beispiel 3 näher beschriebenen Polyvinylalkohols verwendet werden. Auch das so erhaltene Pulver ist sehr gut rieselfähig und sehr gut in Wasser redispergierbar.

### Beispiel 7

Die in Beispiel 3 angegebene Arbeitsweise wird wiederholt mit der Abänderung, daß 450 g eines im Handel erhältlichen, in den endständigen Einheiten je eine Si-gebundene Hydroxylgruppe aufweisenden Dimethylpolysiloxans mit einer Viskosität von etwa 75000 mPa.s bei 23°C verwendet werden. Auch das so erhaltene Pulver ist sehr gut eieselfähig und sehr gut in Wasser redispergierbar. Auch nach 1-jähriger Lagerung ist keine merkliche Veränderung dieses Pulvers zu beobachten.

### Vergleichsversuch a)

Die in Beispiel 4 beschriebene Arbeitsweise wird wiederholt mit der Abänderung, daß 50 g durch teilweise Verseifung von Polyvinylacetat hergestellter Polyvinylalkohol mit einer Verseifungszahl von 290, einem viskosimetrisch bestimmtem Molekulargewicht von etwa 28000 und einem Trübungspunkt von 25°C anstelle der 50 g des in Beispiel 1 näher beschriebenen Polyvinylalkohols verwendet werden. Das so erhaltene Pulver ist klebrig und verklumpt. Bereits nach Verdüsen von 1 l der eingesetzten Emulsion ist der gesamte Trockner innen mit einem dicken Belag versehen.

### Vergleichsversuch b)

Die in Beispiel 3 angegebene Arbeitsweise wird wiederholt mit der Abänderung, daß 50 g Polyvinylpyrrolidon (vgl. US 3 210 208), das keinen Trübungspunkt hat, anstelle der 50 g des in Beispiel 3 näher beschriebenen Polyvinylalkohols verwendet werden. Es wird ein öliger Brei erhalten.

### Vergleichsversuch c)

Die in Beispiel 3 angegebene Arbeitsweise wird wiederholt mit der Abänderung, daß 50 g Gelatine (vgl. US 3 210 208), die keinen Trübungspunkt hat, anstelle der 50 g des in Beispiel 3 näher beschriebenen Polyvinylalkohols verwendet werden. Es wird ebenfalls ein öliger Brei erhalten.

### Vergleichsversuch d)

Die in Beispiel 3 angegebene Arbeitsweise wird wiederholt mit der Abänderung, daß 50 g Casein (vgl. US 3 210 208), das keinen Trübungspunkt hat, anstelle der 50 g des in Beispiel 3 näher beschriebenen Polyvinylalkohols verwendet werden. Bereits nach kurzer Zeit tropft Organopolysiloxan in das Auffanggefäß. Der Versuch wird daraufhin abgebrochen.

### Vergleichsversuch e)

Die in Beispiel 3 angegebene Arbeitsweise wird wiederholt mit der Abänderung, daß 50 g Guar-Gum (vgl. GB 892 787, Beispiel 3), der keinen Trübungspunkt hat, anstelle der 50 g des in Beispiel 3 näher beschriebenen Polyvinylalkohols verwendet werden. Es wird eine verklebte Masse erhalten.

### Vergleichsversuch f)

Die in Beispiel 3 angegebene Arbeitsweise wird wiederholt mit der Abänderung, daß 50 g Carboxymethylcellulose (vgl. US 3 210 208), die keinen Trübungspunkt hat, anstelle der 50 g des in Beispiel 3 näher beschriebenen Polyvinylalkohols verwendet werden. Bereits nach wenigen Minuten tropft Organopolysiloxan in das Auffanggefäß.

### Vergleichsversuch g)

Die in Beispiel 3 angegebene Arbeitsweise wird wiederholt Mit der Abänderung, daß 50 g Hydroxyethylcellulose (vgl. US 3 210 208), die keinen Trübungspunkt hat, anstelle der 50 g des in Beispiel 3 näher beschriebenen Polyvinylalkohols verwendet werden. Bereits nach wenigen Minuten tropft Organopolysiloxan in das Auffanggefäß.

Nicht nur bei den in den Beispielen und Vergleichsversuchen als Ausgangsprodukte eingesetzten Stoffen, bei denen dies ausdrücklich angegeben ist, sondern auch bei allen übrigen in den Beispielen und Vergleichsversuchen als Ausgangspunkte eingesetzten Stoffen handelt es sich um im Handel erhältliche Stoffe.

Bei der bei Vergleichsversuch c) eingesetzten Gelatine handelt es sich um durch alkalischen Aufschluß aus Rinderhaut und/oder Knochen hergestellte Gelatine mit einem Isoelektrischen Punkt bei pH 4,8 bis 5,1 und einem Bloom-Wert (vgl. H. Wunderlich und R. Schrieber in "Lebensmitteltechnik", 8. Jahrgang, 1973, Seite 422 bis 428) von 160.

## Patentansprüche

1. In Wasser redispergierbare, Organo(poly)siloxan enthaltende Pulver, wobei es sich beim Organo(poly)siloxan um solches handelt, bei dem durchschnittlich mindestens zwei SiC-gebundene organische Reste je Siliciumatom vorliegen, von denen ein Teil durch Si-gebundenen Wasserstoff ersetzt sein kann, und das eine Viskosität von 1 mm².s⁻¹ bis 10⁶ mm².s⁻¹ bei 23°C bzw. 25°C besitzt, die Pulver Organo(poly)siloxan der vorstehend definierten Art in Mengen von mindestens 50 Gewichtsprozent, bezogen auf das Gesamtgewicht des jeweiligen Pulvers (berechnet als wasserfreies Pulver), und zusätzlich zum Organo(poly)siloxan wasserlösliches, filmbildendes Polymer enthalten und durch Sprühtrocknung wäßriger Gemische ihrer Bestandteile hergestellt wurden,
**dadurch gekennzeichnet,**
daß zur Herstellung der Pulver als wasserlösliches, filmbildendes Polymer solches mit einem Trübungspunkt von 35°C bis 98°C verwendet wurde und daß die Pulver 5 bis 14 Gewichtsprozent wasserlösliches, filmbildendes Polymer, bezogen auf das Gewicht von zur Herstellung des Pulvers eingesetztem Organo(poly)siloxan, enthalten.

2. Verfahren zur Herstellung von in Wasser redispergierbaren, Organo(poly)siloxan enthaltenden Pulvern, wobei es sich beim Organo(poly)siloxan um solches handelt, bei dem durchschnittlich mindestens zwei SiC-gebundene organische Reste je Siliciumatom vorliegen, von denen ein Teil durch Si-gebundenen Wasserstoff ersetzt sein kann, und das eine Viskosität von 1 mm².s⁻¹ bis 10⁶ mm².s⁻¹ bei 23°C bzw. 25°C besitzt, die Pulver Organo(poly)siloxan der vorstehend definierten Art in Mengen von mindestens 50 Gewichtsprozent, bezogen auf das Gesamtgewicht des jeweils hergestellten Pulvers (berechnet als wasserfreies Pulver), und zusätzlich zum Organo(poly)siloxan wasserlösliches, filmbildendes Polymer enthalten, durch Sprühtrocknung wäßriger Gemische der Bestandteile der Pulver,
**dadurch gekennzeichnet,**
daß als wasserlösliches, filmbildendes Polymer solches mit einem Trübungspunkt von 35°C bis 98°C verwendet wird und daß wasserlösliches, filmbildendes Polymer in Mengen von 5 bis 14 Gewichtsprozent, bezogen auf das Gewicht von eingesetztem Organo(poly)siloxan, verwendet wird.

## Claims

1. Organo(poly)siloxane-containing powders which are redispersible in water, the organo(poly)siloxane being one in which on average at least two SiC-bound organic radicals are present per silicon atom, some of which may be replaced by Si-bound hydrogen, and having a viscosity of 1 mm² . s⁻¹ to 10⁶ mm² . s⁻¹ at 23°C or 25°C, the powders containing organo(poly)siloxane of the type defined above in amounts of at least 50 % by weight, relative to the total weight of the particular powder (calculated as anhydrous powder) and, in addition to the organo(poly)siloxane, a water-soluble, film-forming polymer and having been prepared by spray-drying of aqueous mixtures of their components, characterised in that the water-soluble, film-forming polymer used for the preparation of the powders is one having a cloud point of 35°C to 98°C and in that the powders contain 5 to 14 % by weight of water-soluble, film-forming polymer, relative to the weight of organo(poly)siloxane used for preparing the powder.

2. Process for the preparation of organo(poly)siloxane-containing powders which are redispersible in water, the organo(poly)siloxane being one in which on average at least two SiC-bound organic radicals are present per silicon atom, some of which may be replaced by Si-bound hydrogen, and having a viscosity of 1 mm² . s⁻¹ to 10⁶ mm² . s⁻¹ at 23°C or 25°C, the powders containing organo(poly)siloxane of the type defined above in amounts of at least 50 % by weight, relative to the total weight of the corresponding powder prepared (calculated as anhydrous powder) and, in addition to the organo(poly)siloxane, containing a water-soluble, film-forming polymer and having been prepared by spray-drying of aqueous mixtures of the powder components, characterised in that the water-soluble, film-forming polymer used is one having a cloud point of 35°C to 98°C and in that the water-soluble, film-forming polymer is used in amounts of 5 to 14 % by weight, relative to the weight of organo(poly)siloxane used.

## Revendications

1. Poudres redispersibles dans l'eau, contenant un polyorganosiloxane, dans lesquelles, pour ce qui est du polyorganosiloxane, il s'agit d'un polyorganosiloxane dans lequel on a en moyenne au moins deux radicaux organiques à liaison SiC par atome de silicium, dont une partie peut être remplacée par des hydrogènes liés à Si, et qui a une viscosité de 1 à 10⁶ mm².s⁻¹ respectivement à 23 et à 25°C, les poudres contiennent un polyorganosiloxane du type défini ci-dessus en des quantités d'au moins 50 % en poids par rapport au poids total de la poudre considérée (calculé sur la poudre anhydre) et, outre le polyorganosiloxane, un polymère filmogène soluble dans l'eau et ont été préparés par séchage par atomisation de mélanges aqueux de leurs constituants, caractérisées en ce que, pour préparer les poudres, on a utilisé en tant que polymère filmogène soluble dans l'eau un polymère de ce genre ayant un point de trouble de 35 à 98°C, et que les poudres contiennent 5 à 14 % du polymère filmogène soluble dans l'eau, par rapport au poids du polyorganosiloxane utilisé pour la préparation de la poudre.

2. Procédé destiné à la préparation de poudres redispersibles dans l'eau, contenant un polyorganosiloxane, dans lesquelles, pour ce qui est du polyorganosiloxane, il s'agit d'un polyorganosiloxane dans lequel on a en moyenne au moins deux radicaux organiques à liaison SiC par atome de silicium, dont une partie peut être remplacée par des hydrogènes liés à Si, et qui a une viscosité de 1 à 10⁶ mm².s⁻¹ respectivement à 23 et à 25°C, les poudres contiennent un polyorganosiloxane du type défini ci-dessus en des quantités d'au moins 50 % en poids par rapport au poids total de la poudre considérée (calculé sur la poudre anhydre) et, outre le polyorganosiloxane, un polymére filmogène soluble dans l'eau, par séchage par atomisation de mélanges aqueux des constituants des poudres, caractérisé en ce qu'on utilise en tant que polymère filmogène soluble dans l'eau un polymère de ce genre ayant un point de trouble de 35 à 98°C et que l'on utilise le polymère filmogène soluble dans l'eau en des quantités de 5 à 14 % en poids par rapport au poids du polyorganosiloxane utilisé.
